# EUROPÄISCHE PATENTANMELDUNG

(11) **EP 2 781 584 A1**
(43) Veröffentlichungstag der Anmeldung: **24.09.2014**
(21) Anmeldenummer: 14001057.0
(22) Anmeldetag: 21.03.2014
(51) Int. Cl.: C10L 3/08, C07C 1/12, C07C 9/04, F01K 1/00, F02C 6/00

(54) **Anordnung zum zuführen eines gases und eine solche anordnung aufweisende anlage zur durchführung eines primärprozesses, sowie verfahren des zuführens eines gases**

(30) Priorität: 21.03.2013 DE 102013004996
(71) Anmelder: ETOGAS GmbH, 70565 Stuttgart (DE)
(72) Erfinder: Doll, Roland, 71229 Warmbronn (DE); Erdmann, Matthias, 70326 Stuggart (DE); Grünauer, Maria, 8992 Altaussee (AT); Waldstein, Gregor, 5020 Salzburg (AT)
(74) Vertreter: Leinweber & Zimmermann

(57) **Zusammenfassung**

Die Erfindung betrifft eine Anordnung zum Zuführen eines Wasserstoff und/oder Kohlenstoffverbindungen aufweisenden Gases, dessen Energiegehalt wenigstens teilweise durch thermische Verwertung insbesondere in elektrische Energie umwandelbar ist, zu einem die thermische Verwertung bewirkenden und insbesondere an das elektrische Versorgungsnetz angeschlossenen Kraftwerk.

Erfindungsgemäß vorgesehen ist eine Weiche, mit der wenigstens ein Teil des Gases für eine Zuführung zu einer eine chemische Aufwertung des Gases betreibenden Einrichtung abzweigbar ist.

## Beschreibung

Die Erfindung betrifft eine Anordnung zum Zuführen eines Wasserstoff und/oder Kohlenstoffverbindungen aufweisenden Gases, dessen Energiegehalt wenigstens teilweise durch thermische Verwertung insbesondere in elektrische Energie umwandelbar ist, zu einem die thermische Verwertung bewirkenden und insbesondere an ein oder das bestehende (allgemeine) elektrische Versorgungsnetz angeschlossenes Kraftwerk, eine eine solche Anordnung aufweisende Anlage zur Durchführung eines Primärprozesses, sowie ein Verfahren des Zuführens eines solchen Gases.

Derartige Anordnungen sind aus diversen industriellen Prozessen bekannt, beispielsweise in der Eisenherstellung in Hüttenwerken. Im folgenden wird das Beispiel Hüttenwerk weiter ausgeführt. So kann es sich bei dem Gas um ein Gichtgas (Hochofen-Gas) handeln, ein brennbares Kuppelgas, das trotz seines eher geringen Heizwertes im Bereich von 3 bis 4 MJ/m³ noch thermisch verwertbar ist. Beispielsweise kann das entstaubte Gichtgas zur Erzeugung von Dampf verbrannt werden und so Dampfturbinen zur Stromerzeugung angetrieben werden. Dazu weisen die Hüttenwerke eine entsprechende Zuführanordnung auf, die das Gichtgas dem die thermische Verwertung bewirkenden Kraftwerk zuführt.

Neben einem überwiegenden Stickstoffgehalt von im Bereich von ca. 45 bis 60 % enthält das Gichtgas im wesentlichen noch Kohlenstoffmonoxid im Bereich von etwa 20 bis 30 %, Kohlenstoffdioxid im Bereich von etwa 20 bis 25 %, sowie Wasserstoff im Bereich von ca. 2 bis 4 %.

Weitere Beispiele für die industrielle Erzeugung noch thermisch verwertbarer Gase, die in dieser Anmeldung im folgenden auch als Schwachgase bezeichnet werden, ist das bei der Verkokung von Kohle zu Koks anfallende Kokereigas, welches nach Reinigung von Bestandteilen wie Ammoniak, Schwefelwasserstoff, höheren Kohlenwasserstoffen und Aromaten etwa eine Zusammensetzung von 55 % Wasserstoff, 25 % Methan, 10 % Stickstoff und 5 % Kohlenmonoxid aufweisen kann. Bei der Rohstahlerzeugung nach dem Sauerstoffblasverfahren hat ein aus dem Konverter austretendes Konvertergas eine Zusammensetzung von im Mittel ca. 15 % Kohlendioxid, 65 % Kohlenmonoxid, ca. 18 % Stickstoff und ca. 2 % Wasserstoff. Sämtliche Prozentangaben beziehen sich auf Volumenprozent.

Aufgrund der Giftigkeit des in diesen Gasen enthaltenden Kohlenmonoxids sind Sicherheits- und Vorsichtsmaßnahmen zu treffen, die besonders gut gelingen, wenn das Gas möglichst unmittelbar nach seiner Erzeugung thermisch verwertet wird. Die thermische Verwertung vor Ort ist darüber hinausgehend auch energetisch günstig, da die aus der thermischen Verwertung gewonnene elektrische Energie unmittelbar vor Ort wieder eingesetzt werden kann, in der Hochofenanlage beispielsweise für Kompressoren, die den in den Hochofen einzublasenden Wind antreiben. Auch die bei der thermischen Verwertung anfallende Abwärme lässt sich oftmals unmittelbar für den jeweiligen Primärprozess nutzen.

Der Erfindung liegt die Aufgabe zugrunde, Anordnungen der eingangs genannten Art insbesondere unter energetischen Gesichtspunkten weiter zu verbessern.

Zur Lösung dieser Aufgabe ist unter vorrichtungstechnischen Gesichtspunkten eine Weiterbildung der Anordnung der eingangs genannten Art vorgesehen, die im wesentlichen durch eine Weiche gekennzeichnet ist, mit der wenigstens ein Teil des Gases für eine Zuführung zu einer eine chemische Aufwertung des Gases betreibenden Einrichtung abzweigbar ist.

Obgleich der Einsatz einer solchen Weise die Komplexität einer aus Sicherheitsgründen bevorzugt besonders einfach gestalteten Zuführanordnung erhöhen kann und entsprechenden Zusatzaufwand mit sich bringen kann, ist im Rahmen der Erfindung erkannt worden, dass dieser Zusatzaufwand nebst dem weiteren Aufwand zur chemischen Aufwertung des abgezweigten Gases in speziellen Konstellationen gerechtfertigt sein kann, obwohl der Energiegehalt des chemisch aufgewerteten Gases letztlich doch wieder nur über thermische Verwertung nutzbar ist.

So wird durch die chemische Aufwertung, die in einer bevorzugten Variante durch einen Methanisierungsschritt realisierbar ist, die Möglichkeit geschaffen, das Gas zeitlich variabel und unabhängig vom Energiesystem zu einem späteren Zeitpunkt thermisch zu verwerten, einfacher zu speichern und/oder mit einem pro Speichervolumen höheren verwertbaren Energiegehalt zu versehen.

Ein bloßes Ausfiltern von Gaskomponenten wird dagegen nicht als chemische Aufwertung im Sinne der Erfindung angesehen, die eine chemische Reaktion von Gasbestandteilen voraussetzt. Die chemische Aufwertung ist im obigen Sinne aber mehr als eine bloße chemische Veränderung von Gasbestandteilen, wie sie beispielsweise bei einer Verbrennung stattfindet, die in der Sprache der Anmeldung als chemische Abwertung zu betrachten wäre.

Die Erfindung schafft somit die Grundlage für eine energetisch flexiblere Nutzung von solche Zuführungsanordnungen aufweisenden Systemen. Betrachtet man den Pfad des Kohlenstoffs, wird zudem eine Umlenkung von (im Pfad des Primärprozesses nicht vermeidbarem) Kohlenstoff von dem Emissions- auf den Produktpfad geschaffen. Somit besteht durch die Aufwertung des Schwachgases die Möglichkeit, Emissionen des Kraftwerkes durch den verminderten Einsatz von Kohlenmonoxid oder Kohlendioxid zu verringern.

In einer besonders bevorzugten Ausführungsform ist die Weiche in Abhängigkeit einer Eigenschaft des elektrischen Versorgungsnetzes gesteuert. Die Eigenschaft könnte beispielsweise die Überspeisung des Netzes betreffen, also eine Situation, in der die Netzbalance nicht durch Aufschalten weiterer Einspeiser sondern durch Aufschalten von Verbrauchern oder Abschalten von Einspeisern erreicht wird. Dabei ist vorgesehen, dass die Netzeigenschaft auch der Anteil des im Netzverfügbaren Anteils an volatil erzeugter erneuerbarer Energie ist oder in im wesentlichen direktem Zusammenhang damit steht. Dies kann durchaus mit einer Überspeisung korrelieren, wenn beispielsweise durch starke Windaufkommen und starke Sonneneinstrahlung Windenergieanlagen als auch Photovoltaikanlagen mit hoher Leistung ins Netz einspeisen.

Bevorzugt wird dann bei hohen (steigenden) Überspeisungen/verfügbaren Anteilen an volatil erzeugter Energie eine Weichensteuerung vorgenommen, die die Weiche weg von der Zuführung zur thermischen Verwertung hin zu der Zuführung zur chemischen Aufwertung steuert. Die genaue Art der quantitativen Aufteilung der Gasströme ist durch die Erfindung nicht speziell vorgegeben, eine Proportionalsteuerung ist denkbar, aber auch abgestufte Steuerungen. Bei hohen Überspeisungen kann daran gedacht werden, die Weiche auch zu hundert Prozent auf Zuführung zur chemischen Aufwertung einzustellen. Alternativ könnte aber auch eine Minimalversorgung der thermischen Verwertungseinheit aufrechterhalten bleiben.

Des weiteren kann in einer Ausführungsform der Erfindung vorgesehen werden, die Steuerung gemäß einem in Abhängigkeit der über einen vorbestimmten Zeitrang prognostizierten Netzeigenschaft erstellten Steuerablauf erfolgen zu lassen. In dieser Variante wird man für einen vorgegebenen Zeitraum in der Zukunft Prognosewerte für die Netzeigenschaft, beispielsweise den erwarteten Anteil der von erneuerbaren Quellen bereitgestellten Leistung im Netz erstellen und daraus einen vorgegebenen Steuerablauf ermitteln. Diesen fährt die Steuerung ab, bis nach Ablauf der vorgesehenen Zeitdauer eine neue Prognose und ein neuer Steuerablauf bereitgestellt ist, oder ggf. durch unerwartete Änderungen noch innerhalb der vorgesehenen Zeit ein geänderter Steuerablauf programmiert wird.

In einer alternativen Gestaltung der Steuerung kann auch vorgesehen werden, dass diese gemäß der über eine vorgegebene Abbildung auf eine Steuervorgabe abgebildete aktuell bestehende Netzeigenschaft erfolgt. In diesem Fall verfügt die Steuerung über eine eindeutige Zuordnung von einem oder mehreren Eingangsparametern {e₁(t), e₂(t)...eᵢ(t),...eₙ(t)} auf einen Funktionswert f(t), der zu jedem Zeitpunkt die Weicheneinstellung bestimmt.

In einer spezifizierten Steuerungsvariante kann vorgesehen werden, den Marktwert des Stroms als einen Eingangsparameter der Steuergröße für die Stellung der Weiche zu verwenden. Dabei macht man sich zunutze, dass dieser Eingangsparameter als einfach abrufbarer Wert ein Abbild der komplexeren Netzverhältnisse darstellt. Denn Preise für Strom am Markt werden in der Regel durch erhöhte Einspeisung volatiler erneuerbarer Erzeugung schwanken, beispielsweise wird bei erhöhtem Stromangebot der Marktwert tendenziell sinken.

Die Steuerungskompetenz kann somit auch zu einer zentralen Überwachung hin verlagert werden, der die Steuerparameter vorliegen. Die Anordnung selbst wäre dann fremdgesteuert.

Wie bereits oben erwähnt, kann die chemische Aufwertung bevorzugt ein Methanisieren umfassen oder daraus bestehen. Zweckmäßigerweise werden dazu ungeeignete Bestandteile aus dem abgezweigten Gas ausgefiltert. Diese auszufilternden Bestandteile hängen von der Art des im Primärprozess erzeugten Schwachgases ab, beispielsweise werden Schwefelwasserstoffe ausgefiltert, auch Stickstoff ist bei der chemischen Aufwertung in Form einer Methanisierung nicht erforderlich. Die Filterung kann in mehreren Stufen erfolgen. Vorrichtungstechnisch könnte die Filtereinrichtung teilweise oder auch ganz nach der Weiche, aber auch teilweise oder ganz vor der Weiche angeordnet sein, beispielsweise wenn entsprechende Filter auch hinsichtlich des die thermische Verwertung des nicht abgezweigten Gases bewirkenden Kraftwerkes von Vorteil sind.

In einer weiteren zweckmäßigen Ausführungsform ist eine die chemische Zusammensetzung des abgezweigten Gases messende Einrichtung vorgesehen. Diese könnte anordnungsmäßig bevorzugt vor der Weiche angeordnet sein, in einer abweichenden Weiche aber auch nach der Weiche. Auch könnte die Messeinrichtung grundsätzlich vor und/oder nach der Filtereinrichtung angeordnet sein. Für die Zwecke der Erfindung ist es auch nicht zwingend erforderlich, die chemische Zusammensetzung des abgezweigten Gases hinsichtlich aller Gasbestandteile zu messen. Es sollten jedoch jedenfalls ausreichende Messdaten vorliegen, um das relative Mengenverhältnis von Kohlenstoff gegenüber dem relativen Mengenverhältnis von Wasserstoff im abgezweigten Gas zu bestimmen. Diese Bestimmung kann selbst dann von Vorteil sein, wenn von einer gleichmäßigen Zusammensetzung des im Primärprozess erzeugten Schwachgases ausgegangen werden kann. Alternativ kann der Durchfluss (Volumenstrom) des abgezweigten Gases zusätzlich gemessen werden.

Im weiteren Sinne betrifft die Erfindung entsprechend auch eine Vorrichtung mit einer an die Weiche einer Anordnung nach einem der vorgenannten Aspekte angekoppelten und insbesondere einen katalytischen Methanisierungsreaktor aufweisenden Einrichtung zur chemischen Aufwertung wenigstens eines Teil des von der Weiche abgezweigten Gases.

In einer besonders bevorzugten Ausführungsform weist diese Vorrichtung einen insbesondere durch Energiebezug aus einem, insbesondere dem bestehenden (allgemeinen) elektrischen Versorgungsnetz betreibbaren Elektrolyseur auf, dessen Betrieb steuerbar ist in Abhängigkeit von der an der Messeinrichtung gemessenen Gaszusammensetzung und/oder in Abhängigkeit des Volumenstromes des abgezweigten Gases. Letzterer kann - wie oben beschrieben - wiederum in Abhängigkeit von einer Eigenschaft des elektrischen Versorgungsnetzes gesteuert sein. Der Elektrolyseur dient einer zusätzlichen Zuführung von Wasserstoff für das Erreichen der für die katalytische Methanisierung gewünschten stöchiometrischen Verhältnisse (Kohlenstoff-Wasserstoffverhältnis). Er wird entsprechend bevorzugt dann für die Vorrichtung vorgesehen, wenn bezüglich dieses Verhältnisses ein Kohlenstoffüberschuss im Schwachgas vorhanden ist. Dabei tritt ein Synergieeffekt dadurch ein, dass bei Weichenschaltung auf die chemische Aufwertung die zur Herstellung des Zusatzwasserstoffes bezogene elektrische Leistung dem Versorgungsnetz als elektrische Last insbesondere dann zur Verfügung stehen kann, wenn etwa durch eine volatile Überspeisung die Netzbalance gestört ist. Der Elektrolyseur muß jedoch nicht zeitlich synchron mit der Änderung der Weichenstellung gesteuert werden.

Weiter ist in einer bevorzugten Ausführungsform die Vorrichtung mit einer Kohlendioxid aus einer Kohlendioxidquelle zuführenden Einheit ausgestattet, deren Betrieb insbesondere in Abhängigkeit der von der Messeinrichtung gemessenen Gaszusammensetzung und/oder eines Volumenstromes des abgezweigten Gases steuerbar ist. Die Kohlendioxidzuführung dient dem Erreichen des für die Methanisierung stöchiometrisch richtigen Verhältnisses bei relativem Wasserstoffüberschuss im Schwachgas. Als Kohlendioxidquellen sind mehrere Möglichkeiten denkbar, von weiteren Kohlendioxidgasen, die im Primärprozess entstehen bis hin zu zusätzlichem Kohlendioxidbezug aus externen Quellen, oder auch einer Kohlendioxidgewinnung aus Luft.

Hinsichtlich der Dimensionierung des Methanisierungsreaktors und ggf. auch des Elektrolyseurs oder der Kohlendioxidzuführung kann an eine Minimalabstimmung gedacht werden, bei der die Methanisierung auf einen maximalen Gasumsatz entsprechend einer 100 % auf die chemische Aufwertung geschalteten Weichenstellung ausgelegt ist. Es kann jedoch auch daran gedacht werden, deutlich höhere Methanisierungskapazitäten zu schaffen, insbesondere sofern ein geeigneter Zugang zu einer Kohlendioxidquelle besteht. In diesem Falle verringert sich zum einen die Abhängigkeit des Betriebs des Methanisierungsreaktors von der Weichenstellung, zum anderen kann durch zusätzliche Herstellung von Methan aus dem Kohlendioxid und dem Wasserstoff des Elektrolyseurs über den Elektrolyseur eine zusätzliche Netzentlastung bzw. Stabilisierung erreicht werden.

Besonders bevorzugt weist die chemische Aufwertungseinrichtung einen an ein Gasnetz gekoppelten Ausgang auf, und ist insbesondere gemäß dem dem Gasnetz zugrundeliegenden Einspeisebedingungen gesteuert.

Im weiteren betrifft die Erfindung auch eine übergeordnete Anlage zur Durchführung eines Primärprozesses, bei dem als Nebenprodukt ein Wasserstoff und/oder Kohlenstoffverbindungen aufweisendes Gas entsteht, dessen Energiegehalt wenigstens teilweise durch thermische Verwertung insbesondere in elektrische Energie umwandelbar ist, und die eine Anordnung zur chemischen Aufwertung nach einer der obigen Gestaltungen aufweist.

Die Anlage kann auch das die thermische Verwertung bewirkende Kraftwerk mit umfassen, und/oder eine Vorrichtung nach einem der o. g. Aspekte, also die die chemische Aufwertung betreibende Einrichtung.

Besonders bevorzugt weist die Anlage eine Wärmerückführung von der chemischen Aufwertungseinrichtung zu dem Primärprozess auf. Dadurch wird aufgrund exothermer Aufwertungsprozesse gewonnene Wärme nutzbar gemacht und kompensiert bevorzugt für den Primärprozess die aufgrund der Weichenumstellung fehlende Wärme aus dem Kraftwerk. In einer besonders bevorzugten Ausgestaltung wird sichergestellt, dass sämtliche in hundertprozentiger Weichenstellung auf das thermische Kraftwerk für den Primärprozess gewonnene thermische Energie und elektrische Energie dem Primärprozess auch weiterhin zur Verfügung gestellt wird. Mit anderen Worten bleibt der Primärprozess unabhängig und unbeeinflusst von der Weichenstellung aufrechterhalten.

Dabei ist durchaus vorgesehen, die Wärmerückfuhr variabel zu gestalten und insbesondere aufzuspalten. Beispielsweise könnte das Kraftwerk aus der chemischen Aufwerteeinrichtung mit einer für einen Stand-by erforderlichen Wärme versorgt werden, um rascher wieder in den Einsatzzustand hochgefahren werden zu können.

In verfahrenstechnischer Hinsicht wird unter Schutz gestellt ein Verfahren des Zuführens eines Wasserstoff und/oder Kohlenstoffverbindungen aufweisenden Gases, dessen Energiegehalt wenigtens teilweise durch thermische Verwertung insbesondere in elektrische Energie umwandelbar ist, zu einem die thermische Verwertung bewirkenden Kraftwerk in einer ersten Betriebsart, das im wesentlichen dadurch gekennzeichnet ist, dass man in einer zweiten Betriebsart wenigstens einen Teil des Gases abzweigt und einer die chemische Aufwertung des abgezweigten Gases betreibenden Einrichtung zuführt.

Die Vorteile des erfindungsgemäßen Verfahrens ergeben sich aus den o. g. Vorteilen der erfindungsgemäßen Zuführanordnung.

Weitere bevorzugte Verfahrensgestaltungen sind analog zu den o. g. Anlagenaspekten, das Umschalten zwischen erster und zweiter Betriebsart in Abhängigkeit einer Netzeigenschaft zu steuern, insbesondere gemäß prognostizierten Netzeigenschaften oder aktuellen Netzeigenschaften. Weitere Verfahrenseigenschaften betreffen die Methanisierung des abgezweigten Gasstromes, ggf. nach vorangegangener Filterung. Das Verfahren sieht auch vor, der die chemische Aufwertung des abgezweigten Gases betreibenden Einrichtung zusätzlich in Wasserstoff und/oder zusätzliches Kohlendioxid zuzuführen. Auch ist daran gedacht, das chemisch aufgewertete Gas mit einem sehr hohen Methangehalt von bevorzugt über 92 %, insbesondere auch wenigstens 96 % in ein Gasnetz einzuspeisen. Für letzteres wird das Gas zuvor gemäß den geltenden Einspeisebedingungen konditioniert.

Des weiteren ist vorgesehen, bei der chemischen Aufwertung erzeugte Wärme zu dem Primärprozess zurückzuführen.

Weitere Merkmale, Vorteile und Einzelheiten der Erfindung ergeben sich aus der nachstehenden Figurenbeschreibung.

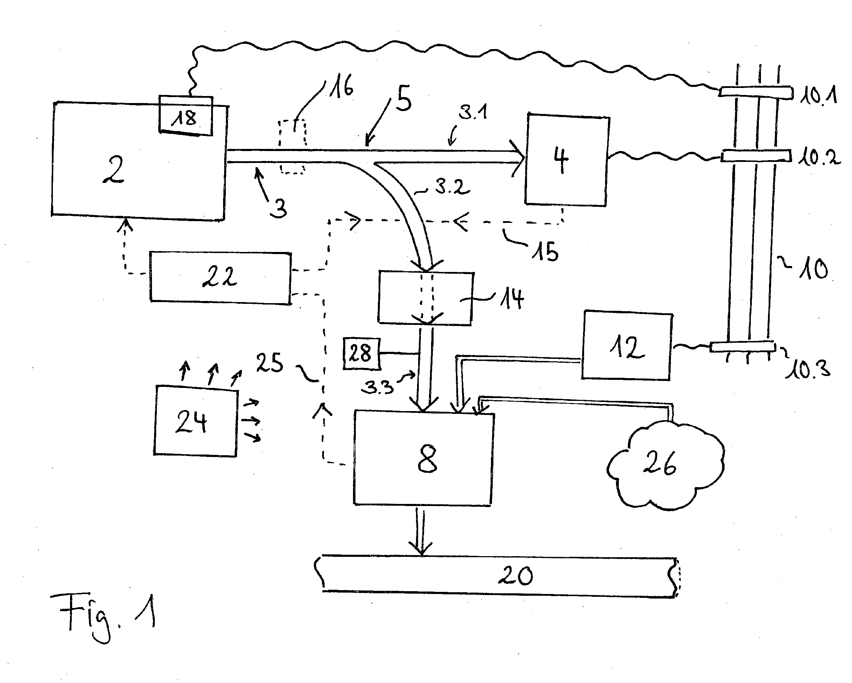

- Fig. 1: zeigt schematisch eine Gesamtanlage eines Primärprozesses mit nachgeschalteten Einrichtungen.

In Fig. 1 ist schematisch ein mit dem Bezugszeichen 2 versehener und der Erzeugung eines Schwachgases zugrundeliegender Primärprozess dargestellt. Dabei könnte es sich um ein Hüttenwerk mit Hochofenprozess zur Eisenherstellung handeln, aber auch beispielsweise um eine Kokerei oder eine Anlage zur Hochstahlerzeugung, oder nochmals andere Prozesse.

Ausgehend vom Primärprozess 2 wird das dabei erzeugte Schwachgas, hier Gichtgas, über eine Ausgangsleitung 3, deren hinterer Abschnitt mit 3.1 bezeichnet ist, einem thermischen Verwerter 4 zugeführt, wo es zur Strom- und Wärmeerzeugung verbrannt werden kann. Die thermische Verwertungseinheit 4 könnte beispielsweise eine Dampfturbinenanlage sein, und deren Erzeugung elektrischer Energie wird schematisch durch eine mit 10.2 bezeichnete Einspeisung in das elektrische Versorgungsnetz 10 dargestellt. Eine elektrische Energie benötigende Untereinheit 18 des Primärprozesses 2, beispielsweise Kompressoren zum Einblasen von Wind in die Hochofenanlage, bezieht elektrische Energie, schematisch dargestellt durch den Abgreifpunkt 10.1 aus dem elektrischen Versorgungsnetz 10. Die Einheit 18 könnte aber die von der Verwertungseinheit 4 erzeugte elektrische Energie auch direkt von letzterer beziehen, ohne Umweg über eine Einspeisung und Entnahme über das elektrische Versorgungsnetz 10.

Die von der thermischen Verwertungseinrichtung 4 erzeugte Wärme wird ebenfalls dem Primärprozess 2 wieder zugeführt, beispielsweise über die in Fig. 1 dargestellte Wärmeleitung 15, die ein den Primärprozess 2 mit Wärme versorgendes Wärmereservoir 22 speist. In Fig. 1 ist sowohl die Versorgung des Primärprozesses 2 mit Wärme als auch mit elektrischer Energie dargestellt. Es könnte jedoch auch auf die Wärmezufuhr verzichtet werden. Genauso könnte vorgesehen sein, dass die thermische Verwertungseinheit 4 nur Wärme erzeugt und diese über den Primärprozess 2 oder anderweitig genutzt wird, oder auch nur elektrische Energie, die auch ohne Rückführung zu dem Primärprozess 2 in das elektrische Versorgungsnetz 10 eingespeist werden könnte. Jedenfalls stellt die thermische Verwertungseinheit 4 sicher, dass ein noch verwertbarer Energiegehalt des Schwachgases noch genutzt wird. Soweit bisher beschrieben, sind Primärprozesse 2 kombiniert mit thermischen Verwertungseinheiten bereits bekannt.

Bei der in Fig. 1 dargestellten Gesamtanlage kann ein Teil des zur thermischen Verwertungseinheit 4 strömenden Schwachgases, der auch hundert Prozent betragen kann, über eine mit 5 bezeichnete Weiche (über eine Leitung 3.2) einer chemischen Aufwerteeinheit 8 zugeführt werden, die in diesem Ausführungsbeispiel durch einen katalytischen Methanisierungsreaktor realisiert ist. Unerwünschte Bestandteile des Schwachgases werden vor Erreichen des Methanisierungsreaktors 8 durch eine Reinigungs- und Filtereinrichtung 14 entfernt, beispielseise Ammoniak, Schwefelwasserstoffe, aber auch höhere Kohlenwasserstoffe oder Aromate. Des weiteren wird Stickstoff aus dem Schwachgas herausgefiltert. Ein Teil der gewünschten Filter- und Reinigungsleistung könnte auch in einen der Weiche 5 stromaufwärts gelegenen Bereich verlagert werden, beispielsweise durch die gestrichelt eingezeichnete Reinigungseinheit 16.

Nach Durchlaufen der Reinigungs- und Filtereinheit 14 weist das im weiteren Leitungsabschnitt 3.3 strömende Gasgemisch andere Bestandteile als Wasserstoff, Methan, Kohlenmonoxid und Kohlendioxid bevorzugt nur noch in unvermeidbaren Resten auf. Die Zusammensetzung kann über Sensor 28 festgestellt und an eine zentrale Steuerung 24 weitergeleitet werden.

Je nach der in diesem Ausführungsbeispiel im Leitungsabschnitt 3.3 gemessenen (sofern nicht bereits durch analytische Betrachtungen des Volumenstromes bekannten) Gaszusammensetzung wird in das zum katalytischen Methanisierungsreaktor 8 strömende Gas noch Wasserstoff oder Kohlendioxid zugegeben. Zum Erreichen eines gewünschten höheren Volumenstroms werden ggf. sowohl Wasserstoff als auch Kohlendioxid zugegeben.

Diese Zuführung erfolgt in einer Grundabstimmung derart, dass das im katalytischen Methanisierungsreaktor 8 eingeführte Eduktgas das für die Methanherstellung erforderliche stöchiometrische Verhältnis von Wasserstoff zu Kohlenstoff besitzt. Des weiteren kann in einer Feinabstimmung vorgesehen werden, etwas Überschuss-Kohlendioxid oder -Wasserstoff zuzuführen, um das im Methanisierungsreaktor 8 erzeugte Produktgas auf gewünschte maximale Wasserstoffgehalte oder gewünschte Restkohlendioxidgehalte zu bringen. Dazu verfügt die Steuereinrichtung 24 über einen Input der für das Gasnetz der öffentlichen Versorgung 20, in das das Produktgas eingespeist wird, herrschenden Einspeisebedingungen, und steuert sowohl den Methanisierungsreaktor 8 als auch die zusätzlich verfügbaren Wasserstoff- oder Kohlendioxidquellen 12 und 26.

Bei der Wasserstoffquelle 12 kann es sich um einen Elektrolyseur zur Kaltelektrolyse von Wasser handeln, dessen elektrischer Energiebedarf über Anschlussstelle 10.3 aus dem elektrischen Versorgungsnetz 10 erfolgt. Die Kohlendioxidquelle 26 könnte entweder durch einen weiteren Kohlendioxid enthaltenden Abgasstrom aus dem Primärprozess 2 gespeist sein, oder aber auch durch einen weiteren externen kohlendioxidhaltigen Gasstrom, gegebenenfalls könnte Kohlendioxid auch aus der Luft gewonnen werden.

Die bei der exothermen Methanherstellung im Reaktor 8 anfallende Wärme kann wiederum das Wärmereservoir 22 füllen und zum Primärprozess 2 zugeführt werden.

Aufgrund der von der Steuereinheit 24 gesteuerten Weiche 5 kann die Anlage in mehreren Betriebsarten gefahren werden. So kann in einer ersten Betriebsart die Weiche 5 derart angesteuert werden, dass sämtliches erzeugtes Schwachgas aus den Leitungen 3 über Leitungsabschnitt 3.1 der thermischen Verwertungseinheit 4 zugeführt wird. Diese Betriebsart entspricht dem üblichen Betreiben eines Primärprozesses 2.

In einer zweiten Betriebsart kann jedoch wenigstens ein Anteil des Schwachgases über Leitung 3.2 dem Methanisierungsreaktor 8 zur chemischen Aufwertung zugeführt werden. In dem dargestellten Ausführungsbeispiel wird die Steuereinrichtung 24 die Weiche 5 in der zweiten Betriebsart ansteuern, wenn es einen entsprechenden Input über eine Eigenschaft des elektrischen Versorgungsnetzes 10 erhält.

Beispielsweise erhält die Steuereinrichtung 24 den Input einer über die nächsten 6 Stunden im elektrischen Versorgungsnetz 10 zu erwartenden Überspeisung bedingt durch einen sehr hohen Anteil im elektrischen Versorgungsnetz 10 enthaltenem Anteil volatil erzeugt erneuerbarer Energien (wenn beispielsweise bei hohem Windaufkommen auch hohe Sonneneinstrahlung besteht und daher sowohl Windenergieanlagen als auch Photovoltaikanlagen mit hoher Leistung ins Versorgungsnetz 10 einspeisen). Dann kann gemäß einem in der Steuereinrichtung 24 hinterlegten Steuerablauf entschieden werden, für die nächsten 6 Stunden sämtliches Schwachgas zur chemischen Aufwertung zu senden und den im Schwachgas enthaltenen Energieinhalt mittels der chemischen Aufwertung über den Methanisierungsreaktor 8 in dem Gasnetz 20 zu speichern.

Da sich ein Anstieg von in das elektrische Versorgungsnetz 10 eingespeister Leistung in einer Tendenz zur Erhöhung der Netzfrequenz äussert, könnte in einer anderen Steuerungsvariante auch vorgesehen sein, die Netzfrequenz in der Nähe des Aufstellungsortes der Anlage zu überwachen und die Stellung der Weiche 5 in Abhängigkeit der überwachten Netzfrequenz so zu steuern, dass der dem Methanisierungsreaktor 8 zugeführte Anteil des Schwachgases mit steigender Netzfrequenz steigt. Diese Steuerung könnte kontinuierlich oder auch abgestuft erfolgen, beispielsweise könnte ab Überschreiten einer vorgegebenen Netzfrequenz wiederum sämtliches Schwachgas zur chemischen Aufwertung gesandt werden.

Da Preise für Strom am Strommarkt bei Überspeisung des Netzes, also bei erhöhtem Angebot, tendenziell sinken, könnte in einer anderen Steuerungsvariante vorgesehen sein, den Wert des vom Kraftwerk erzeugten Stroms als Steuergröße für die Stellung der Weiche 5 zu verwenden. Auch diese Steuerung könnte kontinuierlich oder auch abgestuft erfolgen, beispielsweise könnte sämtliches Schwachgas zur chemischen Aufwertung gesandt werden, sobald dieser Wert unter eine vorgegebene Schwelle fällt, die beispielsweise mit dem Aufwand für diese Stromherstellung aus dem Kraftwerk korreliert.

Es kann auch vorgesehen werden, wenigstens einen Minimalbetrieb der thermischen Verwertungseinheit 4 aufrechtzuerhalten und dementsprechend wenigstens einen Mindestanteil des Schwachgases dorthin zu leiten. Allerdings kann in einer anderen Verfahrensgestaltung die thermische Verwertungseinheit auch in einen Stand-by-Modus versetzt werden, wobei ein für den Stand-by-Modus erforderlicher Wärmebedarf über das von dem Methanisierungsreaktor 8 (über Leitung 25) gespeiste Wärmereservoir 22 erfolgen kann. Der Wärmefluss in Wärmeleitung 15 ist dann dem der ersten Betriebsart entgegengesetzt.

Eine Versorgung der Untereinheit 18 des Primärprozesses 2 mit elektrischer Energie kann in der zweiten Betriebsart über das elektrische Versorgungsnetz erfolgen, was unter den bevorzugten Bedingungen für das Schalten auf die zweite Betriebsart ohnehin günstig ist.

Bevorzugt wird die Bereitstellung von elektrischer Energie und Wärmeenergie für den Primärprozess 2 dabei unabhängig von der Stellung der Weiche 5 aufrechterhalten. Die Durchführung des Primärprozesses 2 erfolgt unabhängig von der Weichenstellung. In einer bevorzugten, keine zusätzliche Wärmequelle benötigenden Verfahrensgestaltung kann die Weiche 5 zur Einnahme einer Stellung gesteuert werden, in der ein aus Primärprozess 2, thermischer Verwertungseinheit 4 und Methanisierungsreaktor 8 bestimmtes Wärmesystem wärmeneutral arbeitet. Dieser Zustand entspricht in der Darstellung von Fig. 1 der Bedingung, dass sich die Wärmezu- und abflüsse des Wärmereservoirs 22 ausgleichen.

Die Erfindung ist nicht auf die in der Figurenbeschreibung dargestellten Spezifikationen eingeschränkt. Vielmehr können die in den anhängigen Ansprüchen sowie in der obigen Beschreibung offenbarten Merkmale einzeln oder in Kombination für die Verwirklichung der Erfindung in ihren verschiedenen Ausführungsformen wesentlich sein.

## Patentansprüche

1. Anordnung zum Zuführen eines Wasserstoff und/oder Kohlenstoffverbindungen aufweisenden Gases, dessen Energiegehalt wenigstens teilweise durch thermische Verwertung insbesondere in elektrische Energie umwandelbar ist, zu einem die thermische Verwertung bewirkenden und insbesondere an das elektrische Versorgungsnetz (10) angeschlossenen Kraftwerk (4),
**gekennzeichnet durch** eine Weiche (5), mit der wenigstens ein Teil des Gases für eine Zuführung zu einer eine chemische Aufwertung des Gases betreibenden Einrichtung (8) abzweigbar ist.

2. Anordnung nach Anspruch 1, bei dem die Weiche (5) in Abhängigkeit einer Eigenschaft des elektrischen Versorgungsnetzes (10) gesteuert ist, insbesondere betreffend dessen Überspeisung und/oder den im elektrischen Versorgungsnetz verfügbaren Anteil an volatil erzeugter erneuerbarer Energie.

3. Anordnung nach Anspruch 2, bei der die Steuerung gemäß einem in Abhängigkeit der über einen vorbestimmten Zeitraum prognostizierten Netzeigenschaft erstellten Steuerablauf erfolgt.

4. Anordnung nach Anspruch 2, bei der die Steuerung gemäß der über eine vorgegebene Abbildung auf eine Steuervorgabe abgebildeter aktuell bestehender Netzeigenschaft, insbesondere Verfügbarkeit des volatil erzeugten Anteils erfolgt.

5. Anordnung nach einem der vorhergehenden Ansprüche, bei der die chemische Aufwertung ein Methanisieren umfaßt oder daraus besteht.

6. Anordnung nach einem der vorhergehenden Ansprüche, mit einer Filtereinrichtung (14, 16) zum Ausfiltern von für die chemische Aufwertungseinrichtung (8) ungewollter Bestandteile aus dem abgezweigten Gas.

7. Anordnung nach einem der vorhergehenden Ansprüche, mit einer die chemische Zusammensetzung des abgezweigten Gases und/oder seinem Volumenstrom messenden Einrichtung (28).

8. Vorrichtung mit einer an die Weiche einer Anordnung nach einem der Ansprüche 1 bis 7 angekoppelten und insbesondere einen katalytischen Methanisierungsreaktor aufweisenden Einrichtung (8) zur chemischen Aufwertung wenigstens eines Teils des von der Weiche abgezweigten Gases.

9. Vorrichtung nach Anspruch 8, mit einem insbesondere durch Energiebezug aus dem elektrischen Versorgungsnetz betreibbaren Elektrolyseur (12), dessen Betrieb insbesondere in Abhängigkeit der von der Messeinrichtung (28) gemessenen Gaszusammensetzung und/oder des Volumenstroms des abgezweigten Gases steuerbar ist.

10. Vorrichtung nach Anspruch 8 oder 9, mit einer Kohlendioxid aus einer Kohlendioxidquelle (26) zuführenden Einheit, deren Betrieb insbesondere in Abhängigkeit der von der Messeinrichtung (28) gemessenen Gaszusammensetzung und/oder des Volumenstroms des abgezweigten Gases steuerbar ist.

11. Vorrichtung nach einem der Ansprüche 8 bis 10, bei dem die chemische Aufwertungseinrichtung (8) einen an ein Gasnetz (20) gekoppelten Ausgang aufweist und insbesondere gemäß den dem Gasnetz zugrundeliegenden Einspeisebedingungen gesteuert ist.

12. Anlage zur Durchführung eines Primärprozesses (2), bei dem als Nebenprodukt ein Wasserstoff und/oder Kohlenstoffverbindungen aufweisendes Gas entsteht, dessen Ener-giegehalt wenigstens teilweise durch thermische Verwertung insbesondere in elektrische Energie umwandelbar ist, **gekennzeichnet durch** eine Anordnung nach einem der Ansprüche 1 bis 7.

13. Anlage nach Anspruch 12, mit einem die thermische Verwertung bewirkenden Kraftwerk (4) und/oder einer Vorrichtung nach einem der Ansprüche 8 bis 11.

14. Anlage nach Anspruch 12 oder 13, mit einer Wärmerückführung (25, 22, 15) von der chemischen Aufwertungseinrichtung (8) zu dem Primärprozess.

15. Verfahren des Zuführens eines Wasserstoff und/oder Kohlenstoffverbindungen aufweisenden Gases, dessen Energiegehalt wenigstens teilweise durch thermische Verwertung insbesondere in elektrische Energie umwandelbar ist, zu einem die thermische Verwertung bewirkenden Kraftwerk in einer ersten Betriebsart,
**dadurch gekennzeichnet, dass** man in einer zweiten Betriebsart wenigstens einen Teil des Gases abzweigt und einer die chemische Aufwertung des abgezweigten Gases betreibenden Einrichtung zuführt.
